# EUROPEAN PATENT APPLICATION

(11) **EP 4 620 719 A1**
(43) Date of publication of application: **24.09.2025**
(21) Application number: 25158898.4
(22) Date of filing: 19.02.2025
(51) Int. Cl.: B60L 15/20, B60L 3/08, B60L 3/10, B60L 3/12, B60L 3/00

(54) **A CONTROL UNIT TO REGULATING A TORQUE DURING A WHEEL SPIN IN A VEHICLE**

(30) Priority: 07.03.2024 IN 202441016362
(71) Applicant: Robert Bosch GmbH, 70442 Stuttgart (DE); Bosch Global Software Technologies Private Limited, Karnataka, Bangalore 560095 (IN)
(72) Inventor: Bilimagga Ramachandra, Manoj Kumar, 571236 Karnataka, Somwarpet, Kodagu District (IN); Santhyadka, Rakshith Chandranath, 574221 Dakshina Kannada, Karnataka (IN)
(74) Representative: Bee, Joachim

(57) **Abstract**

The control unit (10) detects a wheel (11) spin based on a variation in a vehicle parameter and activates a traction control module (14) to calculate and reduce a demanded torque during the wheel spin moment. The control unit (10) calculates a target torque from multiple vehicle parameters and is provided as a desired torque from an inverter unit (16) after comparing the target torque with the demanded torque. The control unit (10) regulates the desired torque in a sequential steps by controlling required phase currents by the inverter unit (16).

## Description

The following specification describes and ascertains the nature of this invention and the manner in which it is to be performed.

### Field of the invention

This invention is related to a control unit for regulating a torque during a wheel spin in a vehicle.

### Background of the invention

In some of the electric motorcycle used in ON/OFF road's, the hazards such as loss of traction, unintended vehicle acceleration and deceleration is rated with ASIL's as per ISO 26262 functional safety standards. It is necessary to monitor the delivered torque to the wheels to mitigate those hazards. In the current idea, we simplified the monitoring of the traction control torque by monitoring its max. and min. values and gradient. Thus, preventing unintended vehicle acceleration and deceleration of the vehicle when motorcycle traction control is activated.

A patent application US20090132123 discloses a vehicle wheel spin control apparatus that, when it is determined that a wheel spin occurs, reduces engine torque to prevent the wheel spin, including: detecting driving control information and information on the state of a vehicle and determining whether basic conditions required to perform engine torque limit control to prevent the wheel spin are satisfied; when the basic conditions are satisfied, calculating a speed variation and the speed gradient value, and comparing the speed gradient value with a predetermined speed gradient value to determine whether a spin occurs; when it is determined that the spin occurs, using a torque gradient map set according to the current engine torque to perform the engine torque limit control; and when the vehicle speed is reduced by the engine torque limit control and cancellation conditions are satisfied, canceling the engine torque limit control and returning to normal control.

### Brief description of the accompanying drawings

Figure 1 illustrates a control unit for regulating a torque during a wheel spin in a vehicle according to one embodiment of the invention; and
Figure 2 illustrates a flowchart of a method for regulating a torque in accordance with the present invention.

### Detailed description of the embodiments

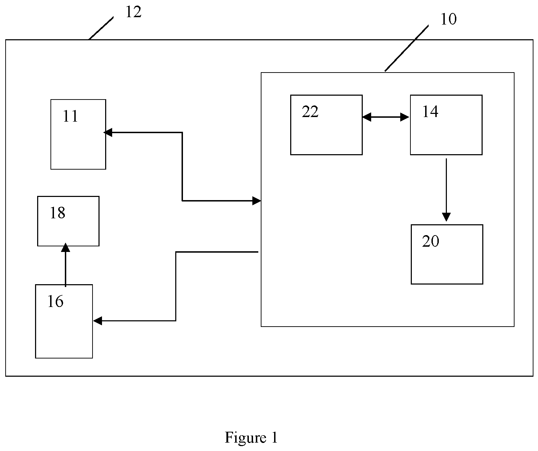

Figure 1 illustrates a control unit for performing a task related to a component according to one embodiment of the invention. T The control unit 10 detects a wheel 11 spin based on a variation in a vehicle parameter and activates a traction control module 14 to calculate and reduce a demanded torque during the wheel spin moment. The control unit 10 calculates a target torque from multiple vehicle parameters and is provided as a desired torque from an inverter unit 16 after comparing the target torque with the demanded torque. The control unit 10 regulates the desired torque in a sequential steps by controlling required phase currents by the inverter unit 16.

Further the construction of the control unit 10 and the components associated with the control unit 10 is explained in detail. The control unit 10 is a logic circuitry and software programs implemented as one or more microprocessors, microcomputers, microcontrollers, digital signal processors, central processing units, state machines, logic circuitries, and/or any component that operates on signals based on operational instructions. The vehicle parameters are chosen from a group of vehicle parameters comprising an electric motor speed gradient (RPM/second), throttle grip position,Motor speed (RPM), RPM gradient. However it is to be understood that, the vehicle parameters can be any other parameters that is known in the state of the art. The control unit 10 comprises a memory 22 storing mulitple target torques mapped to corresponding mulitple rider demanded torques. In the real-time, the contorl unit 10 provides the desired torque from an inverter unit 16 by selecting any of the rider demanded torque that is mapped to the calculated target torque.

The inverter unit 16 supplies the required phase currents to an electric motor 18 of the vehicle 12 for generating the desired torque. The control unit 10 continuously monitors the gradual increase in the desired torque and maintains the desired torque in the predefined limits. During an occurrence of the fault, the control unit 10 identifies the fault upon sensing the desired torque exceeding beyond the predefined limits. The torque limiting module 20 of the control unit 10 is activated upon detection of the fault to maintain a safe limit torque.

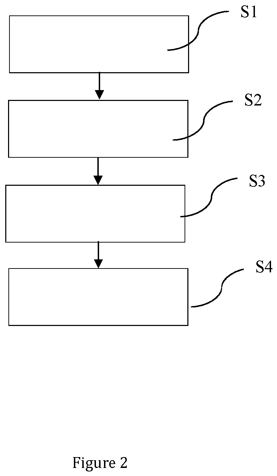

Figure 2 illustrates a flowchart of a method for regulating a torque in accordance with the present invention. In step S1, a wheel 11 spin is detected based on a variation in a vehicle parameter. In step S2, a traction control module 14 is activated to calculate and reduce a demanded torque during the wheel 11 spin moment. In step S3, a target torque is calculated from multiple vehicle parameters and is provided as a desired torque from an inverter unit 16 after comparing the target torque with the demanded torque. In step S4, the desired torque is regulated in a sequential steps by controlling required phase currents by the inverter unit 16.

The method is explained in detail. The control unit 10 activates the traction control module 14 upon detecting a variation in anyone of the vehicle parameters which leads to the wheel spin situation. One such parameter in the present invention is an electric motor speed gradient (RPM per second). When the traction control module 14 is activated, the rider demanded torque is reduced to avoid the wheel 11 spin. The traction control module 14 calculates the target torque to be reduced. When the traction control module 14 is activated, the control unit 10 monitors the target torque reduction by monitoring its torque gradient (Nm per second) and its minimum value. The target torque reduction is always below the rider demanded torque and minimum value. The faster target torque reduction and beyond minimum value would lead to unintended deceleration of the vehicle 12.

This target torque is coordinated with the rider demanded torque and a request will be sent to the inverter unit. The requested torque is referred to as desired torque, which is the output of the inverter unit The desired torque is derived from the rider demanded torque and the target torque and the inverter unit produces the required phase currents to the electric motor to generate the desired torque consistent with the rider demanded torque. When the traction control module is deactivated, the target torque is ramped to the rider demanded torque and the faster ramping and beyond rider demanded torque would lead to uncontrollable acceleration.

The control unit 10 monitors the desired torque and the maintains a sequential increase in torque rather than a sudden increase in the desired torque. The control unit 10 detects a fault in atleast one component of the vehicle 12 and senses a sudden torque jump due to fault Upon detecting this fault, the control unit 10 raises a request to the inverter unit 16 for safe torque maintenance (which is the desired torque in this case). The control unit 10 calculates the permitted torque based on the independent and redundant calculation of rider demanded torque with the addition of tolerance.

It should be understood that embodiments explained in the description above are only illustrative and do not limit the scope of this invention. Many such embodiments and other modifications and changes in the embodiment explained in the description are envisaged. The scope of the invention is only limited by the scope of the claims.

## Claims

1. A control unit (10) in regulating a torque during a wheel (11) spin in a vehicle (12), said control unit (10) adapted to :
- detect a wheel (11) spin based on a variation in a vehicle parameter;
- activate a traction control module (14) to calculate and reduce a demanded torque during said wheel spin moment;
- calculate a target torque from multiple vehicle parameters and is provided as a desired torque from an inverter unit (16) after comparing said target torque with said demanded torque;
- regulate said desired torque in a sequential steps by controlling required phase currents by said inverter unit (16).

2. The control unit (10) as claimed in claim 1, wherein said vehicle parameters are chosen from a group of vehicle parameters comprising an electric motor speed gradient (RPM/second), throttle grip position,Motor speed (RPM), RPM gradient.

3. The contorl unit (10) as claimed in claim 1, wherein the calculated target torque is mapped to a rider demanded torque and the same is provided as a desired torque from an inverter unit (16).

4. The control unit (10) as claimed in claim 1, wherein said inverter unit (16) adapted to supply the required phase currents to an electric motor (18) of said vehicle for generating said desired torque.

5. The control unit (10) as claimed in claim 1, wherein the control unit (10) continuously monitors the gradual increase in the desired torque and maintains the desired torque in the predefined limits.

6. The control unit (10) as claimed in claim 1,wherein said control unit (10) adapted to detect a fault upon sensing said desired torque exceeding beyond said predefined limits.

7. The control unit (10) as claimed in claim 6, wherein upon detection of fault a torque limiting module (20) is activated to maintain a safe limit torque.

8. A method of regulating a torque during a wheel (11) spin in a vehicle (12), said method comprising :
- detecting a wheel (11) spin based on a variation in a vehicle parameter by a control unit (10);
- activating a traction control module (14) to calculate and reduce a demanded torque during said wheel spin moment;
- calculating a target torque from multiple vehicle parameters and is provided as a desired torque from an inverter unit (16) after comparing said target torque with said demanded torque;
- regulating said desired torque in a sequential steps by controlling required phase currents by said inverter unit (16).
